# FASCICULE DE BREVET EUROPEEN

(11) **EP 1 442 927 B1**
(45) Date de publication et mention de la délivrance du brevet: **09.07.2008**
(21) Numéro de dépôt: 04290139.7
(22) Date de dépôt: 20.01.2004
(51) Int. Cl.: B60Q 1/08, B60Q 1/00

(54) **Procédé d'éclairage modulé d'une route et projecteur de véhicule mettant en oeuvre ce procédé**
Verfahren und Scheinwerfer zur modulierten Beleuchtung einer Strasse
Method for modulated lighting of a road and headlamp using such a method

(30) Priorité: 30.01.2003 FR 0301083
(43) Date de publication de la demande: 04.08.2004
(73) Titulaire: VALEO VISION, 93012 Bobigny Cédex (FR)
(72) Inventeur: Brun, Norbert, 77600 Guermantes (FR); Albou, Pierre, 75013 Paris (FR); de Lamberterie, Antoine, 75019 Paris (FR); Leleve, Joël, 93800 Epinay sur Seine (FR)
(74) Mandataire: Renous Chan, Véronique

(56) Documents cités:
- WO-A-01/46734
- DE-A- 4 036 199
- DE-A- 19 926 835
- US-A- 4 030 813
- US-A- 4 985 816
- US-B1- 6 281 806
- PATENT ABSTRACTS OF JAPAN vol. 016, no. 299 (M-1274), 2 juillet 1992 (1992-07-02) -& JP 04 081337 A (NISSAN MOTOR CO LTD), 16 mars 1992 (1992-03-16)

## Description

### Domaine de l'invention

L'invention concerne un procédé d'éclairage d'une route dans lequel la lumière projetée est modulée en fonction de la présence d'un ou de plusieurs êtres vivants dans la scène de route se déroulant devant le véhicule. L'invention concerne également un projecteur de véhicule mettant en oeuvre ce procédé d'éclairage.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules.

### Etat de la technique

Compte tenu du nombre important de véhicules circulant sur les routes, il est nécessaire de procurer, à ces véhicules et à leurs conducteurs, un éclairage le mieux adapté possible afin de réduire les risques d'accidents. En particulier la nuit, il est important que le conducteur puisse avoir une vision optimale de la route qui s'étend devant lui ainsi que des bas cotés de cette route. Autrement dit, pour des questions de sécurité, on cherche à améliorer l'éclairage de la route située devant le véhicule et, ainsi, à améliorer la vision de la scène de route par le conducteur du véhicule.

Actuellement, tous les véhicules roulant sur la route comportent un dispositif d'éclairage de la route, utilisé en particulier la nuit ou lors d'intempéries. Classiquement, il existe sur les véhicules automobiles deux types d'éclairages :
- un éclairage dit «de route » qui éclaire la route intégralement sur une longue distance, d'environ 200 mètres, considérée comme l'infini pour le conducteur, et
- un éclairage dit «de croisement » qui éclaire la route sur une courte distance, de l'ordre de 60 mètres, pour éviter d'éblouir les personnes pouvant se situer sur la route ou sur les bas cotés de la route.

L'éclairage de route est réalisé au moyen de projecteurs de route qui envoient chacun un faisceau lumineux dirigé vers l'horizon.

L'éclairage de croisement est réalisé au moyen de projecteurs de croisement, appelés aussi codes, qui envoient chacun une nappe de lumière descendante donnant une visibilité sur une distance de l'ordre de 60 à 80 mètres. Cette nappe de lumière descendante a pour but d'éviter d'éblouir les éventuels personnages pouvant se trouver, à pied ou dans un véhicule venant en sens inverse, dans la scène de route s'étendant devant le véhicule. Cependant, une telle nappe de lumière descendante n'offre qu'une visibilité réduite au conducteur du véhicule, à l'avant du véhicule. Cet éclairage est souvent insuffisant pour permettre au conducteur d'avoir une bonne visibilité de l'ensemble de la scène de route afin de pouvoir anticiper d'éventuels virages ou d'éventuels obstacles.

Au contraire, l'éclairage de route permet d'éclairer la route s'étendant devant le véhicule jusqu'à l'horizon. Pour cela, l'éclairage de route envoie un faisceau lumineux dirigé vers l'horizon, c'est-à-dire droit devant le véhicule, ce qui ne manque pas d'éblouir les personnages se trouvant sur cette route ou sur les bas cotés de cette route puisqu'ils reçoivent l'éclairage en plein visage.

Actuellement, il n'existe pas de dispositif connu permettant d'éclairer la route à l'infini ou sur une longue distance sans éblouir les personnages se trouvant sur cette route.

Il existe, par ailleurs, un projecteur permettant de moduler le faisceau principal d'éclairage du véhicule sur la route. Un tel projecteur est décrit dans les demandes de brevets DE - 199 07 943 et US - 5938319. Ce projecteur permet de projeter sur la route une indication lumineuse, telle qu'une flèche, pour indiquer, par exemple, la direction que doit suivre le conducteur. Cette indication est alors éclairée tandis que la zone qui l'entoure est sombre, c'est-à-dire non éclairée. Une telle indication lumineuse est réalisée au moyen d'un projecteur comportant une pluralité de micromiroirs ayant des dimensions de l'ordre du 1/10 ^{ieme} ou du 1/100 ^{ième} de millimètre. En d'autres termes, ce projecteur permet de moduler la lumière à projeter sur la route. Cependant, il ne permet une modulation de la lumière que sur une partie du faisceau principal. Il ne permet pas de contrôler la modulation de la totalité du faisceau lumineux émis par un éclairage de croisement classique.

De plus, un tel projecteur présente un coût de fabrication très élevé, de l'ordre de la moitié du prix d'un véhicule actuel. Il est donc difficile d'envisager de monter de tels projecteurs sur des véhicules automobiles fabriqués en série et pour lesquels les constructeurs cherchent constamment à diminuer les prix de fabrication.

Un autre projecteur d'automobile avec modulation de lumière est décrit dans la demande de brevet EP - 0 206 908. Ce projecteur à lumière modulée a pour but de permettre la projection d'un éclairage de croisement ou de route avec uniquement une seule source de lumière. Pour cela, il comporte, entre un réflecteur et une source lumineuse unique, un écran d'occultation interposé sur le trajet des rayons lumineux et comprenant des zones d'occultation constituées de cristaux liquides susceptibles de conférer à ces zones plusieurs états de transparence. Ainsi, lorsque l'éclairage est en mode «éclairage route », l'écran d'occultation est totalement transparent, permettant la projection de la totalité du faisceau lumineux sur la route. En mode «éclairage de croisement », l'écran d'occultation est en partie occultant, permettant ainsi la projection d'une partie seulement du faisceau lumineux émis par la source lumineuse et, en particulier, la partie située sous une ligne d'éclairage appelée «la coupure » et définie par une norme. Cette coupure est une ligne d'éclairage maximum au-dessus de laquelle il est interdit d'éclairer en mode de croisement. Dans les pays à circulation à droite, elle est horizontale sur toute la largeur de la route et sur le bas coté gauche de la route et elle forme un angle de 15° au-dessus de l'horizontale sur le bas coté droit de la route.

Cependant, en pratique, un tel projecteur n'est pas réalisable. En effet, un écran d'occultation à cristaux liquides comme celui décrit dans cette demande de brevet est très sensible à l'énergie reçue et, en particulier, à la température à laquelle il est soumis. Ainsi, un écran d'occultation à cristaux liquides soumis à une énergie trop forte est forcement défaillant. Or, la source lumineuse utilisée pour un éclairage de route est une source lumineuse puissante, trop puissante pour que l'écran d'occultation à cristaux liquides puisse résister physiquement.

Un procédé selon le préambule de la revendication 1 et des projecteurs selon le préambule des revendications 8 et 13 sont connus de US-A-4 985 816.

### Exposé de l'invention

L'invention a justement pour but de remédier aux inconvénients des techniques exposées précédemment. A cette fin, elle propose un projecteur d'éclairage pour véhicule, destiné à l'éclairage de croisement, dans lequel la lumière est modulée en fonction des éventuels personnages se trouvant sur la route. L'invention propose également un procédé d'éclairage mis en oeuvre par ce projecteur. Ce procédé d'éclairage a pour but de détecter les personnes et autres êtres vivants se trouvant dans la scène de route, de créer un cache correspondant, en dimension et en emplacement, à ces personnes et d'éclairer la route avec ce cache de sorte qu'une ombre portée est créée tout autour de la personne. La personne se trouve ainsi dans l'ombre de ce cache, de façon à ce que l'ombre recouvre toute la personne, et éventuellement un peu plus : l'ombre peut avoir la forme, les contours de la personne, ou aussi "déborder" un peu des contours de cette personne pour plus de sûreté.

De façon plus précise, l'invention concerne un procédé d'éclairage d'une scène de route par un projecteur de véhicule, tel que défini dans la revendication 1.

L'invention concerne également deux projecteurs mettant en oeuvre ce procédé, tels que définis dans les revendications 8 et 13.

L'invention propose deux variantes non limitatives quant au choix de l'afficheur: l'afficheur peut comporte une matrice/un ensemble de systèmes à cristaux liquides électro-commandables. Il peut aussi comporter une matrice/un ensemble de lentilles dont la focale est modulable par commande électrique. Ce type de lentilles est notamment décrit dans la demande de brevet EP 1 019 758, son fonctionnement est basé sur le phénomène d'électromouillage. Généralement, chacune de ces lentilles comporte une enceinte remplie d'un premier liquide, une goutte d'un second liquide étant disposée au reps sur une zone d'une première face d'une paroi isolante de l'enceinte, les deux liquides étant non miscibles, d'indices optiques différents et de densités voisines. Le premier liquide est conducteur, le second est isolant, et on utilise des moyens pour appliquer une tension électrique entre le liquide conducteur et une électrode disposée sur la seconde face de ladite paroi. On se rapportera au brevet pré-mentionné pour plus de détails. Dans le cadre de la présente invention, on ajuste la focale en appliquant la tension appropriée, pour que la lentille laisse passer tout ou partie de la lumière, ou aucune lumière.

Avantageusement, ce type de lentille électrocommandable peut être utilisé en matrice ou de façon unitaire pour de nombreuses applications dans des projecteurs ou feux de signalisation de véhicules automobiles.

Avantageusement, le projecteur selon l'invention est associé à une caméra, par exemple une caméra thermique, qui commande le système électronique.

### Brève description des figures

La figure 1 représente schématiquement une route éclairée par un éclairage de croisement classique combiné avec un éclairage selon l'invention.
La figure 2 représente les différents éléments formant un projecteur selon l'invention, commandé par une caméra.
La figure 3 représente un premier mode de réalisation du système optique du projecteur de l'invention.
La figure 4 représente un afficheur du projecteur de l'invention.
La figure 5 représente un second mode de réalisation du système optique du projecteur de l'invention.
Les figures 6 à 9 décrivent un troisième mode de réalisation de l'invention, ayant recours à un afficheur utilisant des lentilles dont on peut régler la focale par commande électrique.

### Description détaillée de modes de réalisation de l'invention

L'invention propose un procédé pour éclairer une scène de route en complément d'un éclairage de croisement classique. Ce procédé offre une étendue d'éclairage plus importante que pour un éclairage de croisement habituel, sans risque d'éblouissement pour les personnes situées sur la route ou sur les bas cotés de la route.

Pour cela, le procédé de l'invention propose d'éclairer la route au-dessus de la coupure en générant une ombre portée autour du ou des personnages se trouvant dans cette zone. Cette ombre portée est générée en affichant, par exemple sur un afficheur à cristaux liquides, un cache correspondant à la position et à la dimension du personnage et occultant une zone de l'afficheur de sorte qu'une partie du faisceau lumineux émis par une source lumineuse ne traverse par l'afficheur et ne soit pas projetée sur la route. Le cache créé permet de réaliser une ombre portée autour du personnage lors de l'éclairage de la scène de route au-delà de la coupure. L'ombre portée correspond à la silhouette du personnage. Elle peut correspondre exactement à la silhouette ou comprendre une zone entourant la silhouette. Dans le cas présent, l'utilisation d'un afficheur à cristaux liquides est possible, sans risque de détérioration prématurée des cristaux liquides, car le système optique retenu n'est pas, de préférence, un module elliptique. C'est effectivement dans les modules elliptiques que le risque d'échauffement est le plus important, dans la mesure où il a recours à une lentille, qui créer un point de convergence des rayons réfléchis par le miroir, créant ainsi un point chaud dans le projecteur.

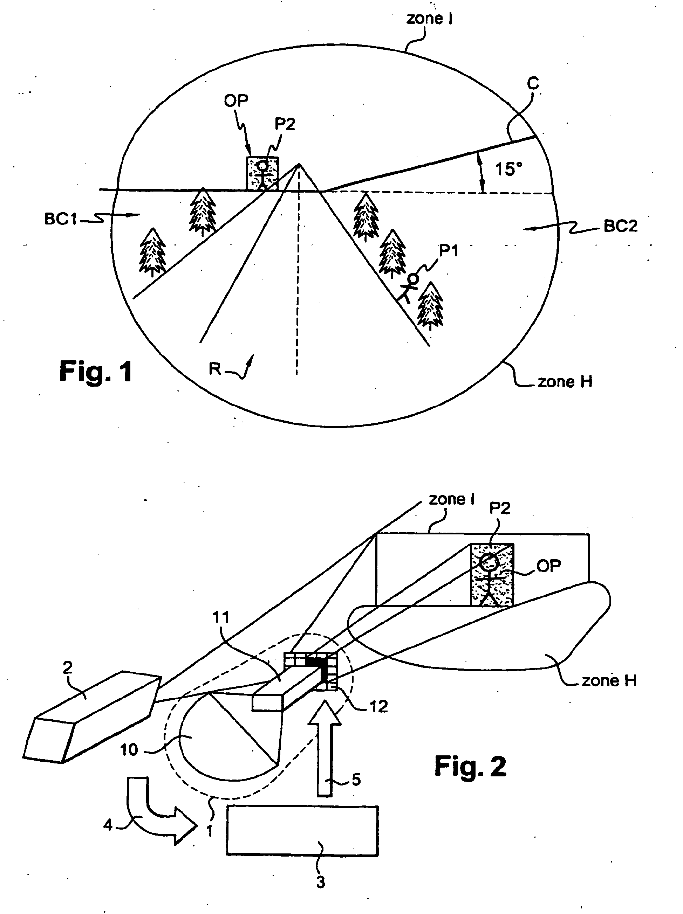

Sur la figure 1, on a représenté un exemple de scène de route. Sur cet exemple, la route est référencée R. Elle comporte un bas coté gauche BC1 et un bas coté droit BC2. Un premier personnage P1 est sur le bas coté droit de la route. Il est situé dans la zone d'éclairage de croisement habituel, zone H, c'est-à-dire la zone d'éclairage située sous la coupure C. Il n'est pas ébloui par l'éclairage de croisement émis par les projecteurs du véhicule. Un second personnage P2 est situé dans la zone d'éclairage au-dessus de la coupure C, zone I, c'est-à-dire la zone de la scène de route éclairée par le projecteur de l'invention.

Cette zone est éclairée au dessus de la coupure grâce à un faisceau additionnel par rapport à un feu de croisement standard. Ce faisceau additionnel est généralement assez large, d'intensité moyenne par rapport à un faisceau de route ordinaire (par exemple de 5 à 30 lux, ou 10 à 20 lux d'intensité, à comparer à l'intensité de l'ordre de 40 à 80 lux pour un route standard), et d'une portée par exemple de l'ordre de 50 à 80 mètres. On le désigne usuellement sous le terme de « route complémentaire » ou encore de « route d'ambiance ».

Le personnage P2 qui est situé dans la zone d'éclairage à l'infini est entouré par une ombre portée OP lui permettant de ne pas être ébloui.

D'une façon générale, dans l'invention, on détecte tous les êtres vivants situés dans la scène de route, qu'il s'agisse d'êtres humains ou d'animaux. Comme on le verra par la suite, cette détection peut se faire, par exemple, par différence de température ou par détection de mouvements. D'une façon générale, on appelle «personnage » tout être vivant détectable selon l'invention.

La figure 2 représente, fonctionnellement, le projecteur de l'invention avec un exemple d'éclairage de la scène de route. L'exemple de scène de route de la figure 2 montre le personnage P2 avec une ombre portée OP autour de lui, dans la zone I d'éclairage. L'ombre portée OP est créée au moyen d'un système optique 1 associé à un système de détection de personnage 2 et à un système électronique de traitement d'image 3. Le système optique 1 et le système électronique de traitement d'image 3 forment ensemble un système de modulation de la lumière émise par une source lumineuse 10.

Selon l'invention, le système de détection 2 de personnage peut être une camera, par exemple une camera thermique, qui réalise des prises d'images de la scène de route située devant le véhicule. Ces images de la scène de route, appelées images naturelles, sont transférées au système électronique 3, comme schématisé par la flèche 4, qui effectue alors un traitement électronique de ces images. Ce traitement permet de localiser le personnage P2 dans la scène de route. Comme on le verra par la suite, ce traitement d'image permet également de créer un cache, ou masque, sur l'afficheur 12 du système optique 1. Ce cache est transmis à l'afficheur d'image 12 , ou imageur, comme schématisé par la flèche 5. Lorsque la source lumineuse 10 émet un faisceau lumineux, celui-ci est dirigé vers l'afficheur 12 au moyen d'un guide de lumière 11. Les zones de l'afficheur 12 qui comportent le cache sont opaques et ne laissent pas passer la lumière. Au contraire, les zones de l'afficheur 12 qui ne comportent pas le cache sont transparentes à la lumière ; le faisceau lumineux émis par la source 10 traverse alors l'afficheur et est projeté vers l'extérieur du projecteur, c'est-à-dire sur la scène de route. Le cache affiché sur l'afficheur 12 empêche le faisceau lumineux de traverser, ce qui génère une ombre portée OP autour du personnage P2.

Le procédé tel qu'il vient d'être décrit est réalisé en temps réel.

Sur la figure 2, on a représenté le système électronique 3 et le système optique 1 indépendants l'un de l'autre. En pratique, le système électronique 3 peut être intégré au sein du système optique 1 comme on le comprendra par la suite.

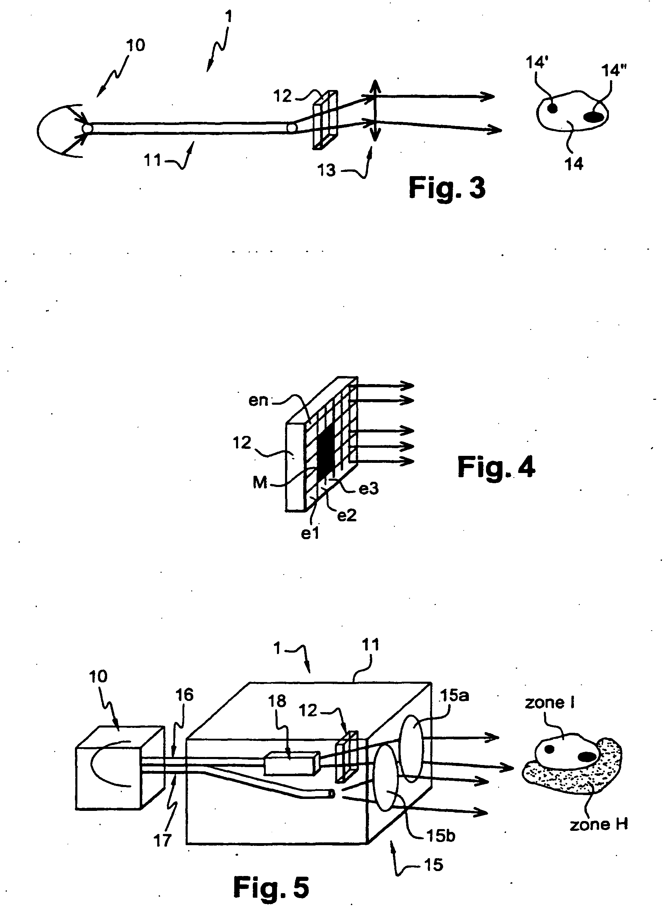

Sur la figure 3, on a représenté un mode de réalisation du système optique 1 du projecteur selon l'invention. Ce système optique 1 comporte un générateur de lumière ou source lumineuse 10. Cette source lumineuse 10 peut être, par exemple, une lampe à décharge ou une source elliptique comme une lampe au xénon, que l'on trouve classiquement dans les véhicules actuels. Cette source lumineuse 10 est reliée à l'afficheur d'image 12 par l'intermédiaire d'un guide de lumière 11. Ce guide de lumière peut être une fibre optique de grosse section. Ce guide peut être aussi, comme dans le mode de réalisation préféré de l'invention, une matrice de fibres optiques transportant la lumière de la source lumineuse jusqu'à l'afficheur 12. Le guide de lumière peut être également utilisé pour réduire la quantité de lumière infrarouge issue de la source lumineuse, ceci pour limiter l'échauffement de l'afficheur. Il peut aussi être utilisé pour uniformiser, devant l'afficheur, la lumière captée de la source. L'afficheur transmet ou ne transmet pas la lumière, selon que le faisceau lumineux atteint une zone avec cache ou sans cache de l'afficheur. La lumière ayant traversé l'afficheur 12 est ensuite diffusée par une optique 13 du projecteur vers la route à éclairer. Cette optique 13 peut être une lentille de diffusion de la lumière.

La forme de la zone I d'éclairage obtenue dépend notamment de l'optique 13 choisie.

Sur la figure 3, le faisceau lumineux projeté sur la route est représenté par une forme quelconque référencée 14. Les références 14' et 14" représentent deux ombres portées obtenues dans la lumière projetée sur la route. En pratique, ces ombres portées 14' et 14" constituent des taches noires, pour le conducteur. Ainsi, lorsque le conducteur aperçoit sur la scène de route une ou plusieurs taches noires, il sait qu'il s'agit d'êtres vivants.

Sur la figure 4, on a représenté un afficheur d'image 12 comportant une matrice d'éléments d'images ou pixels. Ces éléments d'images sont référencés e1, e2, e3, ..., en.

Selon un mode de réalisation préféré de l'invention, l'afficheur 12 est un afficheur à cristaux liquides, chaque cristal formant un élément d'image.

Sur l'afficheur de la figure 4, on a représenté un exemple de cache M. Les éléments d'images constituant le cache sont représentés en noir. Ces éléments d'images noirs sont occultants. Ils empêchent donc la lumière de traverser l'afficheur 12. Au contraire, les éléments d'images qui ne constituent pas le cache M sont représentés en clair. Ils sont transparents et laissent passer la lumière. Le faisceau lumineux résultant, c'est-à-dire obtenu en sortie de l'afficheur 12, présente alors des zones sans lumière qui forment une ombre portée autour du personnage.

Dans l'exemple de la figure 4, le cache M est rectangulaire. Pour obtenir un tel cache de forme particulière, par exemple rectangulaire, on fait subir au cache initialement calculé une convolution par un élément de convolution, par exemple rectangulaire. Cet élément de convolution peut bien sûr avoir une toute autre forme, par exemple ovale. Cette convolution permet de modifier la forme et/ou les dimensions du cache, ce qui a pour but d'ajuster la taille de l'ombre portée autour du personnage.

Le cache affiché sur l'afficheur de la figure 4 est créé par le système électronique 3. Le procédé de création de ce cache est le suivant : lorsque la caméra 2 a détecté un personnage P2 dans la scène de route située devant le véhicule et, en particulier dans la zone I au-dessus de la courbure C, l'image prise par la camera 2 est transmise au système électronique 3. Celui-ci, par un traitement d'image adéquat, localise la position du personnage P2 dans la scène de route ainsi que ses dimensions. Après cette localisation du personnage P2, le système électronique 3 génère, toujours par traitement d'image, un cache. Ce cache est transmis à l'afficheur 12 en inverse vidéo par rapport au cache calculé par le système électronique. En effet, dans l'image prise par la caméra (dans le cas d'une caméra thermique), les zones détectées (correspondant à un personnage) sont blanches tandis que les zones non détectées sont noires. Le système électronique traite l'image naturelle prise par la caméra et obtient finalement un cache constitué d'éléments blancs. Il effectue donc une inversion vidéo du cache obtenu et transmet ce cache « en inverse vidéo » à l'afficheur. Sur l'afficheur, le cache se trouve donc composé d'éléments noirs, c'est-à-dire opaques à la lumière, la zone qui ne constitue pas le cache étant composée d'éléments blancs, c'est-à-dire transparents à la lumière.

Plus précisément, dans le cas où la camera 2 est une camera thermique capable de détecter un être vivant, telle qu'une camera thermique à 10 microns, alors la camera détecte les sources chaudes qui apparaissent plus brillantes sur l'image que le reste de l'image de la scène de route. On obtient alors ce qu'on appelle une image thermique. On sélectionne ensuite, pour cette image thermique, une zone à traiter, c'est-à-dire la zone la plus brillante de l'image. Cette sélection est déterminée en fonction d'un seuil de brillance prédéfini. Au-delà de ce seuil, on considère que l'élément matriciel de la camera correspond à une zone chaude et donc à la présence d'un personnage. Chaque élément micro-bolométrique de la matrice de la camera est ainsi seuillé pour déterminer s'il s'agit d'une zone chaude ou non de la camera. Les zones chaudes correspondent à un personnage tandis que les zones non chaudes correspondent à l'absence de tout être vivant.

En d'autres termes, le traitement d'image réalisé par le système électronique 3 consiste à sélectionner les zones de l'image thermique au-delà d'une certaine température, c'est-à-dire d'un seuil prédéfini. On obtient alors une image seuillée qui fait apparaître uniquement le personnage dans la scène de route. Cette image seuillée comporte deux niveaux, à savoir un niveau blanc et un niveau noir. De préférence, le personnage apparaît sur un niveau saturé en blanc tandis que le reste de l'image apparaît sur un niveau saturé en noir. Cette image est ensuite transmise en inverse vidéo à l'afficheur 12 et affichée sur l'afficheur. On obtient ainsi, sur l'afficheur, une image seuillée inversée comportant un cache formé par des éléments d'images noirs. Ce cache correspond aux dimensions et à l'emplacement du personnage dans la scène de route. Ainsi, en éclairant la route avec la source de lumière 10, à travers l'afficheur 12, seule la partie du faisceau lumineux traversant l'afficheur en dehors du cache est projetée sur la route. La lumière projetée sur la route est ainsi modulée par le cache affiché sur l'afficheur 12. Une ombre portée est alors créée autour du personnage.

Un procédé analogue peut être mis en oeuvre avec une caméra sensible travaillant dans le visible ou le proche infrarouge.

Selon une variante de l'invention, le système électronique 3 peut affiner la réalisation du cache, par exemple, en cherchant le contour du personnage P2 avant de déterminer l'image seuillée.

Selon une autre variante, déjà expliquée, le cache peut subir une convolution avec un élément de convolution adéquat qui permet de modifier la taille et la forme du cache.

Le système électronique 3 qui vient d'être décrit peut être, par exemple, un circuit intégré ou un DSP (processeur de signaux numériques). Il peut donc très facilement être intégré à l'intérieur du système optique 1 du projecteur de l'invention.

Sur la figure 5, on a représenté un second mode de réalisation du système optique du projecteur de l'invention. Les éléments de ce système optique qui sont identiques à ceux du système optique de la figure 3 comportent des références identiques.

Dans ce mode de réalisation, le système optique 1 comporte une source lumineuse 10 et un afficheur 12, reliés par un guide de lumière 11 comportant deux conduits de lumière 16 et 17. Ces deux conduits de lumière peuvent d'être deux matrices de fibres optiques ou deux fibres optiques de grosse section. La première matrice de fibres optiques 16 est destinée à guider la lumière de la source lumineuse jusqu'à l'afficheur 12. La partie du faisceau lumineux ayant traversé l'afficheur 12 est ensuite diffusée à l'extérieur du projecteur par une optique de sortie 15a qui peut être, par exemple, une lentille de diffusion comme la lentille 13 de la figure 3.

La seconde matrice de fibres optiques 17 est destinée à conduire la lumière de la source de lumière 10 directement sur une optique de sortie du projecteur, référencée 15b. Cette optique 15b peut être identique à l'optique 15a.

Ce mode de réalisation à deux conduites lumineuses apporte un avantage sur le plan énergétique, car elle permet de générer un faisceau code élaboré avec un maximum d'énergie, sans passage dans l'afficheur qui présente une transmission, à l'état passant, d'environ 80%. Seul les environ 20% de faisceau lumineux destinés à former la zone I susceptible d'éblouir le personnage sont contrôlés par le modulateur, c'est-à-dire transmis par l'afficheur.

Ainsi, dans ce mode de réalisation, le projecteur peut générer à la fois une lumière de croisement éclairant la zone H et une lumière supplémentaire éclairant la zone I, produite selon le procédé de l'invention. Le système optique permet alors, avec une même source lumineuse 10, de créer à la fois l'éclairage de croisement de la zone H et l'éclairage infini de la zone I. Dans un autre mode de réalisation de l'invention, la source lumineuse 10 peut être destinée uniquement à former la zone 1 de d'éclairage à l'infini. Dans ce cas, on peut utiliser l'éclairage habituel du véhicule pour former la zone H d'éclairage de croisement. Le projecteur de l'invention qui assure l'éclairage de la zone I peut alors être placé dans le phare du véhicule ; le projecteur de croisement du véhicule comporte alors deux sources lumineuses, l'une projetant la lumière directement vers l'optique de sortie et l'autre projetant la lumière à travers l'afficheur. Le projecteur de l'invention peut aussi être placé à un endroit différent du phare, dans la calandre du véhicule. Un véhicule automobile pourrait ainsi comporter, par exemple, trois projecteurs, à savoir deux projecteurs de croisement classiques (appelés aussi phares) et un projecteur selon l'invention placé par exemple au milieu de l'avant du véhicule.

Dans le cas de la figure 5, comme dans le cas de la figure 3, le système électronique 3 intervient en amont de l'afficheur 12 pour créer un cache à afficher sur l'afficheur 12, la lumière émise par la source lumineuse 10 étant projetée vers l'extérieur du projecteur comme expliqué précédemment.

Dans le mode de réalisation de la figure 5, le faisceau lumineux est transmis par fibres optiques de la source lumineuse 10 jusqu'à l'afficheur 12 par l'intermédiaire d'un bloc ou d'un barreau de quartz ou de verre 18, dont le rôle est d'assurer l'homogénéisation du faisceau lumineux et la réduction de ses rayonnements infrarouges. Autrement dit, ce bloc ou ce barreau de quartz ou de verre 18 permet d'éviter que l'afficheur 12 ne reçoive une énergie trop importante qui serait néfaste à son fonctionnement.

Un tel bloc ou barreau de quartz ou de verre 18 peut également être inséré entre la matrice de fibres optiques 11 et l'afficheur 12, dans le système optique de la figure 3.

Il est à noter, en outre, que l'utilisation d'une lampe à décharge comme source lumineuse 10 permet d'éviter les problèmes dus à une température excessive sur l'afficheur, la lampe à décharge étant une source froide. En outre, le transport de la lumière par des fibres optiques permet également de diminuer la chaleur éventuelle de la lumière émise par la source lumineuse 10.

Dans le mode de réalisation de la figure 5, le système optique 1 est en majeure partie intégré dans un boîtier de projecteur 15. La source lumineuse 10 est incorporée dans un boîtier indépendant du boîtier 15. Ce boîtier peut alors être placé à l'extérieur du projecteur, ce qui permet d'obtenir un projecteur de taille réduite et sans contrainte thermique. Les liaisons optiques 11 doivent dans ce cas être plus longues. Cette séparation de la source lumineuse 10 peut également être réalisée dans le mode de réalisation de la figure 3. Parallèlement, dans le mode de réalisation de la figure 5, la source lumineuse 10 peut être incorporée dans le boîtier 15, avec le système optique 1.

Dans toute la description qui précède, le moyen de détection d'un personnage est décrit comme étant une caméra thermique. Ce moyen de détection peut également être une camera infrarouge associée à une détection par mouvement. Dans ce cas, la camera assure la prise d'image d'une scène de route et le système électronique 3 détecte et localise les personnages par une détection de mouvement. Selon une variante de l'invention, une détection thermique peut être couplée avec une détection de mouvement pour sécuriser la détection d'être vivants.

Dans une variante de l'invention, il est prévu de déplacer verticalement, d'une faible distance, les fibres optiques dans le plan focal de l'optique 13 pour moduler la lumière et réaliser ainsi des faisceaux lumineux compatibles avec les fonctions « adverse weather lighting» ou « motorway lighting», c'est-à-dire les fonctions d'éclairage par temps de pluie ou d'éclairage sur autoroute.

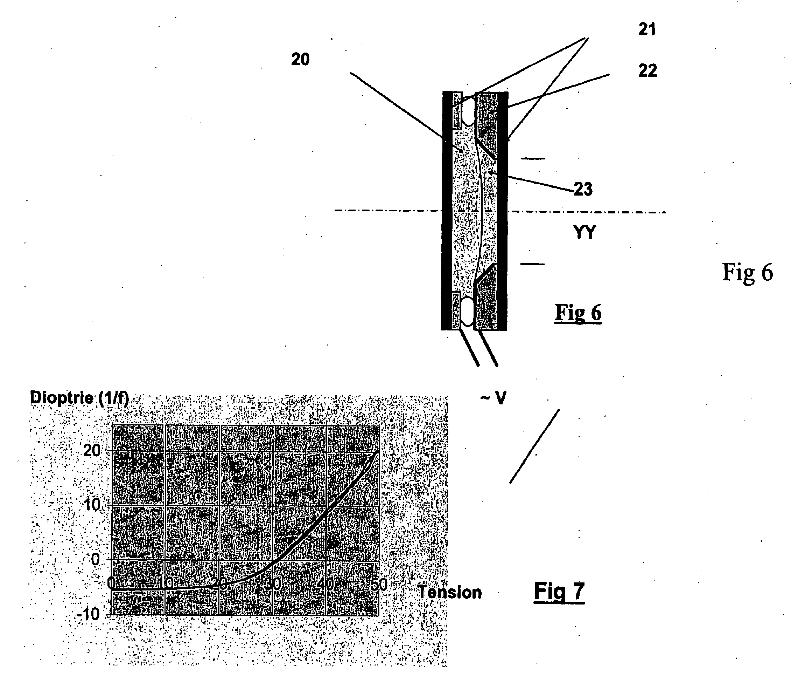

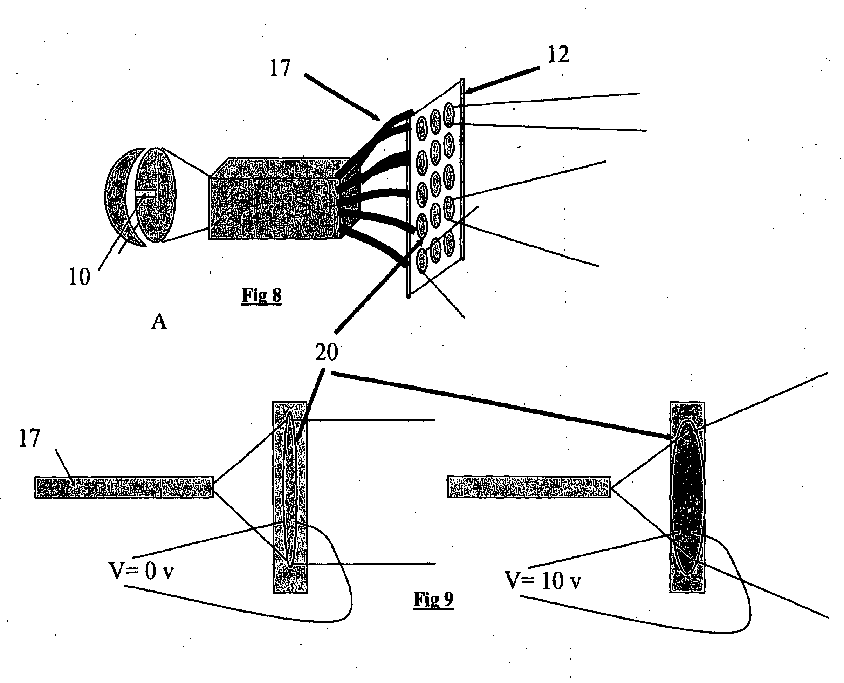

Les figures 6 à 9 illustrent une autre variante de l'invention, utilisant un afficheur 12 constitué d'une matrice de lentilles dont la focale est commandable électriquement. Le principe en est le suivant : comme représenté en figure 6, on fait une lentille en plaçant entre deux parois 21 en verre ou en plastique transparent un liquide conducteur 20 (de l'eau) et une goutte d'un liquide 23 non miscible à l'eau (une huile). YY représente l'axe optique , et on prévoit un support 22. Sous l'effet d'un champ électrique appliquée de façon appropriée, la goutte d'huile présente un profil variable, car elle va mouiller de façon différente la paroi sur laquelle elle a été déposée, ce qui modifie la focale de la lentille a proprement composée de cette goutte. Deux profils possibles ont été représentés respectivement par une ligne continue et une ligne en pointillés. La figure 7 représente la variation de dioptrie de la lentille en fonction de la tension appliquée : l'amplitude de variation est très élevée. Les figures 8 et 9 représentent l'ensemble du système optique, de façon similaire à la figure 5 et les mêmes références : on utilise un système de fibres optiques 17 associé à l'afficheur 12 utilisant une matrice de lentilles conformes à la figure 6. La figure 9 illustre la variation de forme d'une des lentilles selon que la tension qui lui est appliquée est de 0 ou 10 volts.

Le procédé selon l'invention qui vient d'être décrit permet de fournir un éclairage de croisement supérieur à l'éclairage habituel, situé au-dessus de la coupure, tout en s'assurant que cet éclairage supplémentaire n'éblouit pas les éventuels êtres vivants se trouvant dans son champ. Cette lumière supplémentaire obtenue en zone I permet au conducteur de voir la scène de route au-delà de la coupure C. Les taches noires visibles par le conducteur dans cet éclairage supplémentaire l'informent sur la présence d'êtres vivants dans la scène de route. Ce procédé de l'invention permet ainsi de détecter des éventuels obstacles pour le conducteur.

Quel que soit son mode de réalisation, le projecteur de l'invention assure une meilleure perception et une meilleure visibilité de la route au conducteur. En effet, ce projecteur permet un éclairage classique de la scène de route et ainsi qu'un éclairage plus lointain, au-delà de la coupure. Même si cet éclairage plus lointain comporte des taches noires, et même si celles-ci sont nombreuses, par exemple dans le cas d'un groupe de personnages sur le bas coté de la route, le conducteur a nécessairement une meilleure visibilité qu'avec un éclairage classique puisque cet éclairage plus lointain est un éclairage additionnel.

## Revendications

1. - Procédé d'éclairage d'une scène de route par un projecteur de véhicule, comportant les opérations suivantes:
- détection dans la scène de route d'au moins un personnage (P2),
- localisation de ce personnage dans la scène de route,
- création, sur un afficheur (12), d'un cache de dimensions et d'emplacement correspondant au personnage,
- éclairage de la route à travers l'afficheur créant une ombre portée (OP) autour du personnage;
**caractérisé en ce que** ledit personnage étant détecté au moyen d'une détection thermique et /ou d'une détection de mouvement, et **en ce que** l'éclairage de la route à travers l'afficheur éclaire uniquement une zone de la scène de route (zone 1) située au-dessus d'une coupure (C), l'éclairage de la route en dessous de ladite coupure étant effectué par un éclairage de croisement.

2. - Procédé d'éclairage selon la revendication 1, **caractérisé en ce que** la localisation et la création de cache sont réalisées par traitement d'image.

3. - Procédé d'éclairage selon l'une quelconque des revendications 1 à 2, **caractérisé en ce que** la localisation comporte un seuillage de l'image de la scène de route.

4. - Procédé d'éclairage selon la revendication **3, caractérisé en ce que** le seuillage consiste à réaliser une image à deux niveaux, noir et blanc, de l'image de là scène de route.

5. - Procédé d'éclairage selon la revendication 4, **caractérisé en ce que** la création du cache comporte l'affichage en inverse vidéo de l'image seuillée sur l'afficheur.

6. - Procédé d'éclairage selon l'une quelconque des revendications 3 à 5, **caractérisé en ce que** la création du cache comporte une convolution de l'image seuillée par un élément de convolution.

7. - Procédé d'éclairage selon l'une quelconque des revendications 1 à 6, **caractérisé en ce que** la création du cache est faite en temps réel.

8. - Projecteur d'éclairage de route pour véhicule comportant une première source de lumière (10) et un système de modulation de cette lumière, comportant un afficheur (12) et un système électronique (3) pour générer des caches de lumière sur l'afficheur, ledit système électronique étant commandé par un moyen de détection d'au moins un personnage (P2), les dimensions et l'emplacement des caches correspondant au personnage (P2) détecté **caractérisé en ce que** le système de modulation comporte un guide de lumière (11) transportant la lumière de la source de lumière vers l'afficheur **en ce que** le moyen de détection est une camera thermique (2) et/ou une caméra infrarouge (2), **en ce que** ledit projecteur permet de générer un éclairage de croisement présentant une coupure (C) et **en ce que** l'éclairage à travers l'afficheur permet de former un éclairage uniquement au-dessus de ladite coupure (C).

9. - Projecteur d'éclairage selon la revendication 8, **caractérisé en ce que** l'afficheur comporte une matrice de systèmes à cristaux liquides électro-commandables ou une matrice de lentilles dont la focale est modulable par commande électrique.

10. - Projecteur d'éclairage selon la revendication 8 ou 9, **caractérisé en ce que** le guide de lumière comporte au moins une matrice de fibres optiques ou une fibre optique de grosse section.

11. - Projecteur d'éclairage selon la revendication 8 à 10, **caractérisé en ce que** le guide de lumière comporte un premier conduit de lumière (16) guidant la lumière vers l'afficheur et un second conduit de lumière (17) guidant la lumière directement vers une optique de diffusion de la lumière.

12. - Projecteur d'éclairage selon la revendication 11, **caractérisé en ce qu'il permet** la réalisation d'un faisceau code élaboré avec un maximum d'énergie, sans passage dans l'afficheur (12) qui présente une transmission, à l'état passant, d'environ 80%, seul les environ 20% de faisceau lumineux étant transmise par l'afficheur (12), pour générer respectivement une lumière de croisement éclairant la scène de route située en-dessous de la coupure (zone H) et une lumière supplémentaire éclairant la scène de route située au-dessus de la coupure (zoné I).

13. - Projecteur d'éclairage de route pour véhicule comportant une première source de lumière (10) et un système de modulation de cette lumière, comportant un système électronique (3) pour générer des caches de lumière sur l'afficheur, ledit système électronique étant commandé par un moyen de détection d'au moins un personnage (P2), les dimensions et l'emplacement des caches correspondant au personnage (P2) détecté, **caractérisé en ce que** système de modulation comporte un afficheur (12) comportant une matrice de lentilles dont la focal est modulable par commande électrique, des fibres optiques (11) transportant la lumière de la source de lumière vers l'afficheur, **en ce que** le moyen de détection est une caméra thermique (2) et/ou une caméra infrarouge (2), **en ce que** ledit projecteur permet de générer un éclairage de croisement présentant une coupure (C) et **en ce que** l'éclairage à travers l'afficheur permet de former un éclairage uniquement au-dessus de ladite coupure (C)..

14. - Projecteur d'éclairage selon l'une quelconque des revendications 8 à 13, **caractérisé en ce qu'**il comporte une seconde source de lumière indépendante de la première source, et assurant ledit éclairage de croisement, la première source permettant l'éclairage uniquement, au dessus de ladite coupure (C).

15. - Projecteur d'éclairage selon l'une quelconque des revendications 8 à 14, **caractérisé en ce que** le guide de lumière comporte, en amont de l'afficheur, un dispositif pour homogénéiser la .répartition de la lumière dans l'afficheur.

16. - Projecteur d'éclairage selon la revendication 15, **caractérisé en ce que** le dispositif pour homogénéiser la lumière est un bloc ou un barreau de quartz ou de verre (18).

17. - Projecteur d'éclairage selon l'une quelconque des revendications 8 à 16, **caractérisé en ce qu'il** comporte une lentille (13) de diffusion de la lumière en aval de l'afficheur.

18. - Projecteur d'éclairage selon l'une quelconque des revendications 8 à 17; **caractérisé en ce que** la première source de lumière est placée dans un bottier extérieur au système de modulation.

## Claims

1. Method for lighting of a road scene by a vehicle headlight, comprising the following operations:
- detection in the road scene of at least one person (P2);
- location of this person in the road scene;
- creation on a display (12) of a mask with the dimensions and location corresponding to the person;
- lighting of the road via the display to create a range shadow (OP) around the person;
**characterised in that** the said person is detected by means of thermal and/or movement detection, and **in that** the lighting of the road via the display lights only an area of the road scene (area 1) which is situated above a cut-off (C), the road lighting below the said cut off being provided by dipped lighting.

2. Lighting method according to claim 1, **characterised in that** the location and creation of the mask are carried out by means of image processing.

3. Lighting method according to one of claims 1 and 2, **characterised in that** the location comprises thresholding of the image of the road scene.

4. Lighting method according to claim 3, **characterised in that** the thresholding consists of producing a black and white two-level image, of the image of the road scene.

5. Lighting method according to claim 4, **characterised in that** the creation of the mask comprises inverse video display of the thresholded image on the display.

6. Lighting method according to any one of claims 3 to 5, **characterised in that** the creation of the mask comprises convolution of the thresholded image by a convolution element.

7. Lighting method according to any one of claims 1 to 6, **characterised in that** the mask is created in real time.

8. Road lighting headlight for a vehicle comprising a first source of light (10) and a system for modulation of this light, comprising a display (12) and an electronic system (3) for generation of light masks on the display, the said electronic system being controlled by a means for detection of at least one person (P2), the dimensions and positioning of the mask corresponding to the person (P2) detected, **characterised in that** the modulation system comprises a light guide (11) which transports the light from the source of light towards the display, **in that** the means for detection is a thermal camera (2) and/or an infrared camera (2), **in that** the said headlight makes it possible to generate dipped lighting with a cut-off (C), and **in that** the lighting via the display makes it possible to form lighting only above the said cut-off (C).

9. Lighting headlight according to claim 8, **characterised in that** the display comprises a matrix of liquid crystal systems which can be controlled electrically, or a matrix of lenses, the focal point of which can be modulated by electric control.

10. Lighting headlight according to claim 8 or 9, **characterised in that** the light guide comprises at least one matrix of optical fibres or an optical fibre with a large cross-section.

11. Lighting headlight according to claims 8 to 10, **characterised in that** the light guide comprises a first light duct (16) which guides the light towards the display, and a second light duct (17) which guides the light directly towards an optical unit for diffusion of the light.

12. Lighting headlight according to claim 11, **characterised in that** it permits production of a dipped beam produced with a maximum of energy, without passage into the display (12), which has transmission in the passing state of approximately 80%, only the approximately 20% of light beam being transmitted by the display (12) in order to generate respectively a dipped light which lights the road scene situated below the cut-off (area H) and an additional light which lights the road scene which is situated above the cut-off (area 1).

13. Road lighting headlight for a vehicle, comprising a first source of light (10) and a system for modulation of this light, comprising an electronic system (3) for generation of light masks on the display, the said electronic system being controlled by a means for detection of at least one person (P2), the dimensions and positioning of the mask corresponding to the person (P2) detected, **characterised in that** the modulation system comprises a display (12) comprising a matrix of lenses, the focal point of which can be modulated by electric control, optical fibres (11) which transport the light from the source of light towards the display, **in that** the means for detection is a thermal camera (2) and/or an infrared camera (2), **in that** the said headlight makes it possible to generate dipped lighting with a cut-off (C), and **in that** the lighting via the display makes it possible to form lighting only above the said cut-off (C).

14. Lighting headlight according to any one of claims 8 to 13, **characterised in that** it comprises a second source of light which is independent from the first source, and provides the said dipped lighting, the first source permitting lighting only above the said cut-off (C).

15. Lighting headlight according to any one of claims 8 to 14, **characterised in that**, upstream from the display, the light guide comprises a device to homogenise the distribution of the light in the display.

16. Lighting headlight according to claim 15, **characterised in that** the device to homogenise the light is a block or bar of quartz or glass (18).

17. Lighting headlight according to any one of claims 8 to 16, **characterised in that** it comprises a lens (13) for diffusion of the light downstream from the display.

18. Lighting headlight according to any one of claims 8 to 17, **characterised in that** the first source of light is placed in a box outside the modulation system.

## Patentansprüche

1. Verfahren zum Beleuchten einer Straßenszene durch einen Fahrzeugscheinwerfer, mit den folgenden Schritten:
- Erfassen wenigstens einer Person (P2) in der Straßenszene,
- Lokalisieren der Person in der Straßenszene,
- Erzeugen einer in Größe und Position der Person entsprechenden Abdeckung auf einer Anzeigeeinrichtung (12),
- Beleuchten der Straße durch die Anzeigeeinrichtung hindurch, wobei ein Schatten (OP) um die Person herum erzeugt wird,
**dadurch gekennzeichnet, dass** die Person mittels einer Wärmedetektion und/oder einer Bewegungsdetektion erfasst wurde und dass die Beleuchtung der Straße durch die Anzeigeeinrichtung hindurch ausschließlich in einem oberhalb einer Hell-Dunkel-Grenze (C) gelegenen Bereich der Straßenszene (Bereich I) erfolgt, wobei die Beleuchtung der Straße unterhalb der Hell-Dunkel-Grenze durch ein Abblendlicht erfolgt.

2. Beleuchtungsverfahren nach Anspruch 1,
**dadurch gekennzeichnet, dass** die Lokalisierung und die Erzeugung der Abdeckung durch Bildverarbeitung erfolgen.

3. Beleuchtungsverfahren nach einem der Ansprüche 1 bis 2,
**dadurch gekennzeichnet, dass** die Lokalisierung einen Schwellenwertvergleich des Bildes der Straßenszene umfasst.

4. Beleuchtungsverfahren nach Anspruch 3,
**dadurch gekennzeichnet, dass** der Schwellenwertvergleich darin besteht, von dem Bild der Straßenszene ein Bild mit zwei Stufen, schwarz und weiß, zu erzeugen.

5. Beleuchtungsverfahren nach Anspruch 4,
**dadurch gekennzeichnet, dass** die Erzeugung der Abdeckung die Anzeige des Schwellenwertbildes in invertierter Darstellung auf der Anzeigeeinrichtung umfasst.

6. Beleuchtungsverfahren nach einem der Ansprüche 3 bis 5,
**dadurch gekennzeichnet, dass** die Erzeugung der Abdeckung eine Faltung des Schwellenwertbildes durch ein Faltungselement umfasst.

7. Beleuchtungsverfahren nach einem der Ansprüche 1 bis 6,
**dadurch gekennzeichnet, dass** die Erzeugung der Abdeckung in Echtzeit erfolgt.

8. Fernlichtscheinwerfer für Fahrzeuge, mit einer ersten Lichtquelle (10) und einem System zur Modulation dieses Lichts, das eine Anzeigeeinrichtung (12) und ein elektronisches System (3) zum Erzeugen von Lichtabdeckungen auf der Anzeigeeinrichtung umfasst, wobei das elektronische System durch ein Mittel zum Erfassen wenigstens einer Person (P2) gesteuert wird, wobei Größe und Position der Abdeckungen der erfassten Person (P2) entsprechen,
**dadurch gekennzeichnet, dass** das Modulationssystem einen Lichtleiter (11) umfasst, der das Licht von der Lichtquelle zur Anzeigeeinrichtung transportiert, dass das Erfassungsmittel eine Wärmebildkamera (2) und/oder eine Infrarotkamera (2) ist, dass der Scheinwerfer ein Abblendlicht mit einer Hell-Dunkel-Grenze (C) zu erzeugen vermag und dass die Beleuchtung durch die Anzeigeeinrichtung hindurch eine Beleuchtung ausschließlich oberhalb der Hell-Dunkel-Grenze (C) zu erzeugen vermag.

9. Scheinwerfer nach Anspruch 8,
**dadurch gekennzeichnet, dass** die Anzeigeeinrichtung eine Matrix aus elektrisch ansteuerbaren Flüssigkristallsystemen oder eine Linsenmatrix umfasst, deren Brennweite durch elektrische Steuerung modulierbar ist.

10. Scheinwerfer nach Anspruch 8 oder 9,
**dadurch gekennzeichnet, dass** der Lichtleiter wenigstens eine Lichtwellenleitermatrix oder einen Lichtwellenleiter mit großem Querschnitt umfasst.

11. Scheinwerfer nach Anspruch 8 bis 10,
**dadurch gekennzeichnet, dass** der Lichtleiter eine erste, das Licht zur Anzeigeeinrichtung leitende Lichtleitung (16) und eine zweite, das Licht zu einer Lichtstreuungsoptik leitende Lichtleitung (17) umfasst.

12. Scheinwerfer nach Anspruch 11,
**dadurch gekennzeichnet, dass** er die Erzeugung eines mit einem Lichtmengenmaximum gebildeten Abblendlichtbündels ermöglicht, ohne Durchgang durch die Anzeigeeinrichtung (12), die im Durchlasszustand eine Durchlässigkeit von etwa 80 % aufweist, wobei nur die etwa 20 % des Lichtbündels durch die Anzeigeeinrichtung (12) übertragen werden, um ein die Straßenszene unterhalb der Hell-Dunkel-Grenze (Bereich H) beleuchtendes Abblendlicht bzw. ein die Straßenszene oberhalb der Hell-Dunkel-Grenze (Bereich I) beleuchtendes Zusatzlicht zu erzeugen.

13. Fernlichtscheinwerfer für Fahrzeuge, mit einer ersten Lichtquelle (10) und einem System zur Modulation dieses Lichts, das ein elektronisches System (3) zum Erzeugen von Lichtabdeckungen auf der Anzeigeeinrichtung umfasst, wobei das elektronische System durch ein Mittel zum Erfassen wenigstens einer Person (P2) gesteuert wird, wobei Größe und Position der Abdeckungen der erfassten Person (P2) entsprechen,
**dadurch gekennzeichnet, dass** das Modulationssystem eine Anzeigeeinrichtung (12) mit einer Linsenmatrix umfasst, deren Brennweite durch elektrische Ansteuerung modulierbar ist, wobei Lichtwellenleiter (11) das Licht von der Lichtquelle zur Anzeigeeinrichtung transportieren, dass das Erfassungsmittel eine Wärmebildkamera (2) und/oder eine Infrarotkamera (2) ist, dass der Scheinwerfer ein Abblendlicht mit einer Hell-Dunkel-Grenze (C) zu erzeugen vermag und dass die Beleuchtung durch die Anzeigeeinrichtung hindurch eine Beleuchtung ausschließlich oberhalb der Hell-Dunkel-Grenze (C) zu erzeugen vermag.

14. Scheinwerfer nach einem der Ansprüche 8 bis 13,
**dadurch gekennzeichnet, dass** er eine zweite Lichtquelle umfasst, die von der ersten Lichtquelle unabhängig ist und das Abblendlicht zu erzeugen vermag, wobei die erste Lichtquelle ausschließlich die Beleuchtung oberhalb der Hell-Dunkel-Grenze (C) ermöglicht.

15. Scheinwerfer nach einem der Ansprüche 8 bis 14,
**dadurch gekennzeichnet, dass** der Lichtleiter vor der Anzeigeeinrichtung eine Vorrichtung zur Homogenisierung der Lichtverteilung in der Anzeigeeinrichtung umfasst.

16. Scheinwerfer nach Anspruch 15,
**dadurch gekennzeichnet, dass** die Vorrichtung zur Homogenisierung des Lichts ein Block oder ein Stab (18) aus Quarz oder Glas ist.

17. Scheinwerfer nach einem der Ansprüche 8 bis 16,
**dadurch gekennzeichnet, dass** er nach der Anzeigeeinrichtung eine Lichtstreuungslinse (13) umfasst.

18. Scheinwerfer nach einem der Ansprüche 8 bis 17,
**dadurch gekennzeichnet, dass** die erste Lichtquelle in einem Gehäuse außerhalb des Modulationssystems angeordnet ist.
